# EUROPÄISCHE PATENTSCHRIFT

(11) **EP 1 904 720 B1**
(45) Veröffentlichungstag und Bekanntmachung des Hinweises auf die Patenterteilung: **10.03.2010**
(21) Anmeldenummer: 06760785.3
(22) Anmeldetag: 13.07.2006
(51) Int. Cl.: F01M 5/00, F01M 11/03, F28F 3/08

(54) **ÖLKÜHLER**
OIL COOLER
REFROIDISSEUR D'HUILE

(30) Priorität: 15.07.2005 AT 48505 U
(43) Veröffentlichungstag der Anmeldung: 02.04.2008
(73) Patentinhaber: Pustelnik, Philipp, 1190 Wien (AT); Euler-Rolle, Thomas, 1030 Wien (AT)
(72) Erfinder: Pustelnik, Philipp, 1190 Wien (AT); Euler-Rolle, Thomas, 1030 Wien (AT)
(74) Vertreter: Holzer, Walter
(86) Internationale Anmeldenummer: PCT/AT2006/000298
(87) Internationale Veröffentlichungsnummer: WO 2007/009141

(56) Entgegenhaltungen:
- EP-A1- 0 874 140
- DE-A1- 19 624 358
- DE-A1- 19 939 264
- FR-A1- 2 584 806
- US-A- 5 810 071

## Beschreibung

Die Erfindung betrifft einen Ölkühler, insbesondere für Hydrauliköl.

Derartige Ölkühler wie beschreiben im Dokument DE 199 39 264 A1 werden üblicherweise in Form eines parallelepipedischen Paketes aus beabstandeten Platten aufgebaut, die Kühlmediumkanäle und Ölkanäle voneinander trennen, wobei an den Stirnseiten des Paketes Anschlüsse für die Zu- und Abfuhr des Öls und des Kühlmittels vorgesehen sind.

Die Erfindung zielt darauf ab, einen derartigen Plattenkühler dahingehend weiter zu verbessern, daß er zugleich eine Filterfunktion erfüllen kann. Ein erfindungsgemäßer Ölkühler zeichnet sich dadurch aus, daß dem Plattenpaket auf einer Stirnseite Filterplatten vorgeschaltet sind, deren Abmessungen den Abmessungen der Kühlerplatten im wesentlichen entsprechen und die mit dem Plattenpaket über eine Abschlußstirnplatte lösbar verbunden und von Öldurchtrittsöffnungen durchsetzt sind, welche mit einer Öleinlaßöffnung in der Abschlußstirnplatte und einer Öleinlaßöffnung in der Plattenpaketstirnseite in Verbindung stehen.

Auf diese Weise kann eine Filterung des zuströmenden oder des abströmenden Öls vorgenommen werden, wodurch vorteilhaft ein dem Plattenkühler vor- oder nachgeschalteter gesonderter Filter vermieden wird.

Vorzugsweise sind zwischen den Filterplatten Stützplatten aus einem Drahtgewebe od. dgl. angeordnet. Auf konstruktiv einfache Weise sind im Rahmen der Erfindung die Filterplatten und gegebenenfalls die Stützplatten von das Filterpaket zusammenspannenden Schraubenbolzen durchsetzt.

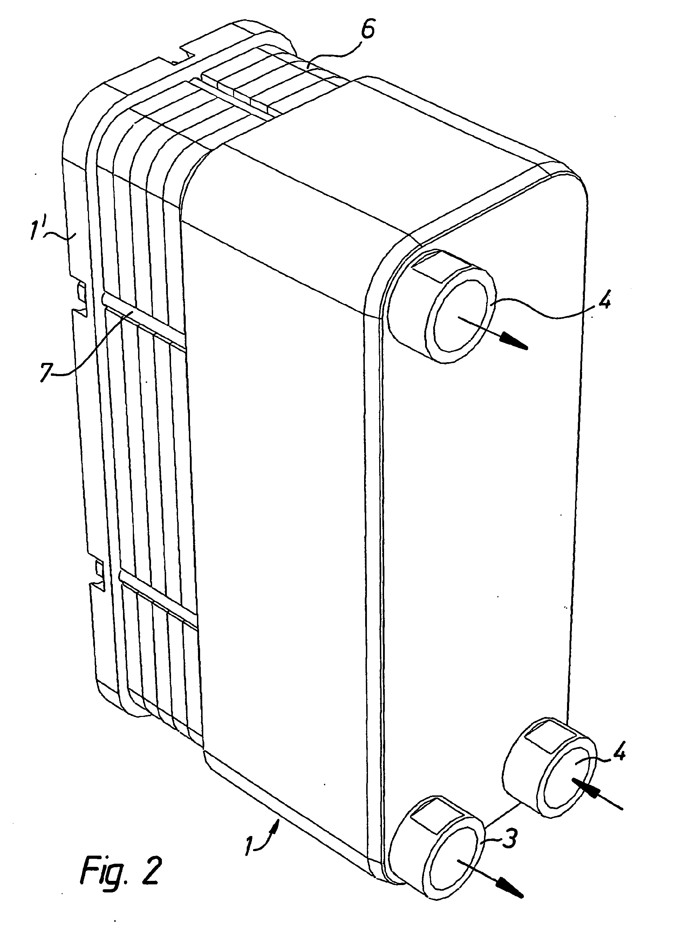

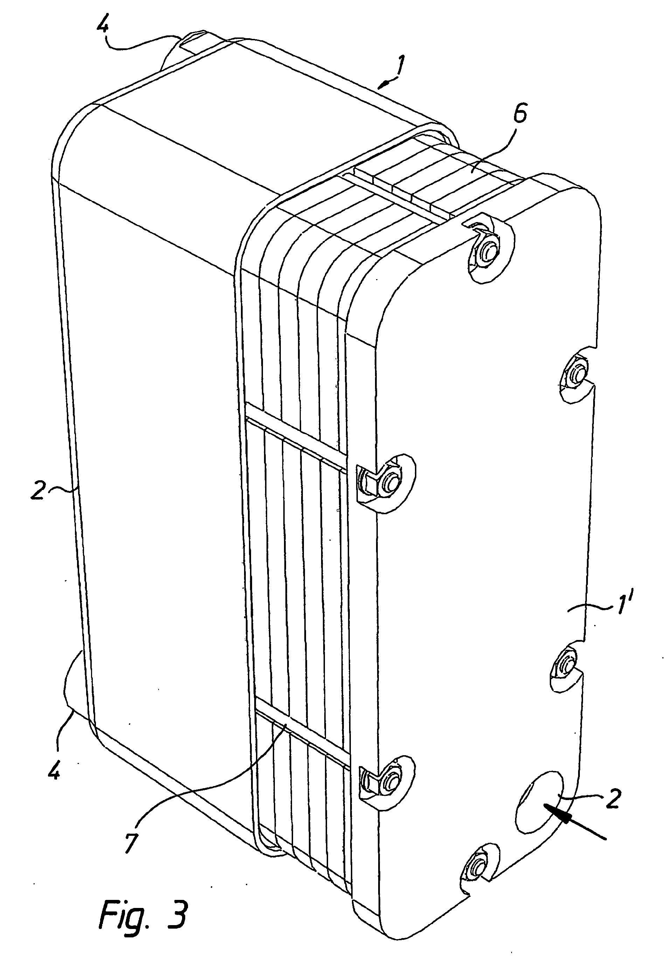

Ein Ausführungsbeispiel der Erfindung wird nachfolgend unter Bezugnahme auf die Zeichnungen näher erläutert, die in Fig. 1 einen Plattenkühler gemäß der Erfindung in gesprengter Darstellung und in den Fig. 2 und 3 Perspektivansichten des erfindungsgemäßen Ölkühlers in zusammengebautem Zustand zeigt.

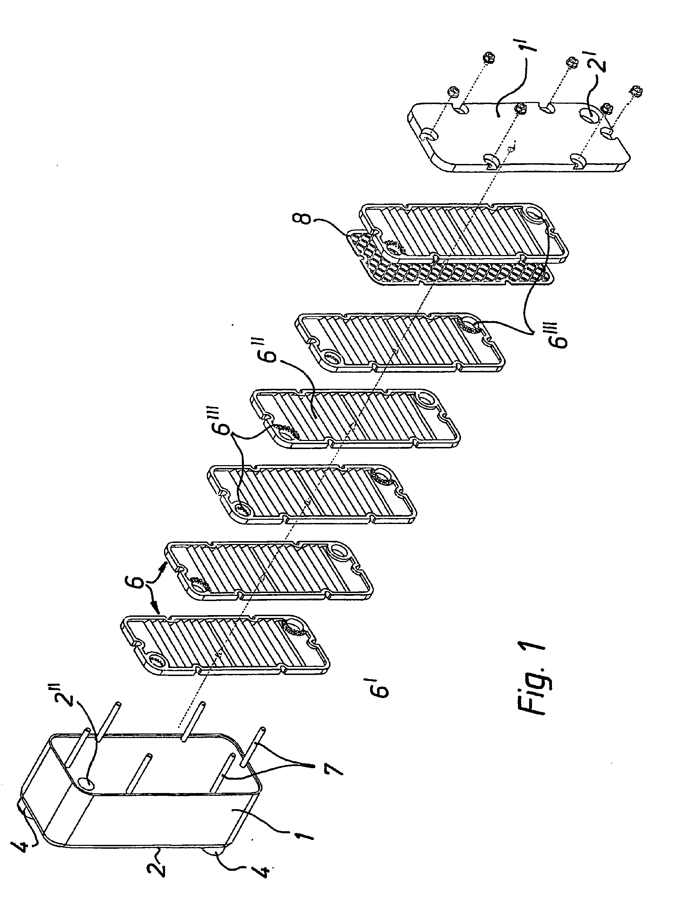

Wie Fig. 1 zeigt, besteht der aus parallelen Platten aufgebaute Hydraulikölkühler aus einem Ölkanäle und Kühlmediumkanäle bildenden Plattenpaket 1 mit in wesentlicher parallelepipedischer Gestalt. Die Platten sind in ihren Umfangsrändern miteinander verlötet. Das Paket wird von Ölkanälen und Kühlmittelkanälen durchsetzt, für die an einer Stirnseite 2 des Paketes Anschlüsse 3 bzw. 4 vorgesehen sind.

Auf der einen Stirnseite 5 des Plattenpaketes 1 sind diesem beim gezeigten Beispiel vier Filterplatten 6 vorgeschaltet, die mit ihren Umfangsrändern 6' abdichtend aneinander anschließen und durch Schraubenbolzen 7 mit einer abschließenden Stirnplatte 1' verbunden sind. Diese Filterplatten 6 enthalten diagonal gegenüberliegende Durchtrittsöffnungen 6"' für das Öl, die mit einer Öleintrittsöffnung 2' in der Abschlußstirnplatte 1' und einer Öleinlaßöffnung 2" der Plattenpaketstirnseite 5 in Verbindung stehen. Die Umfangsränder 6' sind aus Gummi oder Kunststoff und das eigentliche Filtermedium 6" aus einem Papier oder Kunststoffflies gebildet. Zwischen den Filterplatten 6 können zusätzliche Stützplatten 8 aus einem Kunststoff- oder Stahldrahtgewebe angeordnet sein. Beim gezeigten Beispiel ist nur eine dieser Platten gezeigt. Die Stützplatte 8 kann auch in die Filterplatte integriert sein.

Der Betriebsdruck eines derartigen Kühlers beträgt 14 bis 20 bar und kann bis zu 30 bar betragen. Je nach Filterleistung und Durchflußmenge wird die entsprechende Anzahl von Filterplatten 4 dem eigentlichen Plattenkühler vorgeschaltet und damit dessen Einbauhöhe variiert.

## Patentansprüche

1. Ölkühler, insbesondere für Hydrauliköl, der in Form eines parallelepipedischen Paketes aus beabstandeten Platten aufgebaut ist, die Kühlmediumkanäle und Ölkanäle voneinander trennen, wobei an einer Stirnseite des Paketes Anschlüsse für die Zu- und Abfuhr des Öls und des Kühlmittels vorgesehen sind, **dadurch gekennzeichnet, daß** dem Plattenpaket (1) auf der anderen Stirnseite (5) Filterplatten (6) vorgeschaltet sind, deren Abmessungen den Abmessungen der Kühlerplatten im wesentlichen entsprechen und die mit dem Plattenpaket (1) über eine Abschlußstirnplatte (1') lösbar verbunden und von Öldurchtrittsöffnungen (6"') durchsetzt sind, welche mit einer Öleinlaßöffnung (2') in der Abschlußstirnplatte (1') und einer Öleinlaßöffnung (2") in der Plattenpaketstirnseite (5) in Verbindung stehen.

2. Ölkühler nach Anspruch 1, **dadurch gekennzeichnet, daß** zwischen den Filterplatten (6) Stützplatten (8) aus einem Drahtgewebe od. dgl. angeordnet sind.

3. Ölkühler nach Anspruch 1 oder 2, **dadurch gekennzeichnet, daß** die Filterplatten (6) und gegebenenfalls die Stützplatten (8) von das Filterpaket zusammenspannenden-Schraubenbolzen (7) durchsetzt sind, die an der Abschlußstirnplatte (1') festgelegt sind.

## Claims

1. Oil cooler, in particular for hydraulic oil, constructed in the form of a parallelepiped-shaped package of plates which are spaced apart and which separate coolant channels and oil channels from one another, connecting pieces for supplying and removing the oil and the coolant being provided on an end face of the package, **characterised in that** filter plates (6) are arranged upstream from the plate package (1) on the other end face (5), the dimensions of said filter plates substantially corresponding to the dimensions of the cooler plates and said filter plates being releasably connected to the plate package (1) by means of a closing end plate (1') and being penetrated by oil throughput openings (6"'), which are connected to an oil inlet opening (2') in the closing end plate (1') and to an oil inlet opening (2") in the plate package end face (5).

2. Oil cooler according to claim 1, **characterised in that** support plates (8) made of a wire mesh or the like are arranged between the filter plates (6).

3. Oil cooler according to either claim 1 or claim 2, **characterised in that** the filter plates (6) and optionally the support plates (8) are penetrated by threaded bolts (7) which hold the filter package together and which are fixed in place on the closing end plate (1').

## Revendications

1. Refroidisseur d'huile, en particulier pour huile hydraulique, qui est constitué de plaques espacées sous la forme d'un paquet parallélépipédique, lesquelles séparent des canaux d'agent de refroidissement et des canaux d'huile les uns des autres, des raccords étant prévus sur un front du paquet pour l'amenée et l'évacuation de l'huile et de l'agent de refroidissement, **caractérisé en ce que** des plaques filtrantes (6) sont montées en amont du paquet de plaques (1) sur l'autre front (5), dont les dimensions correspondent essentiellement aux dimensions des plaques du refroidisseur et qui sont reliées de manière amovible au paquet de plaques (1) par une plaque frontale d'obturation (1') et sont traversées par des ouvertures de passage d'huile (6"') qui se trouvent en liaison avec une ouverture d'admission d'huile (2') dans la plaque frontale d'obturation (1') et avec une ouverture d'admission d'huile (2") dans le front (5) du paquet de plaques.

2. Refroidisseur d'huile selon la revendication 1, **caractérisé en ce que** des plaques d'appui (8) en toile métallique ou similaire sont disposées entre les plaques filtrantes (6).

3. Refroidisseur d'huile selon la revendication 1 ou 2, **caractérisé en ce que** les plaques filtrantes (6) et éventuellement les plaques d'appui (8) sont traversées par des boulons filetés (7) serrant ensemble le paquet de plaques filtrantes, qui sont fixés sur la plaque avant d'obturation (1').
